# FASCICULE DE BREVET EUROPEEN

(11) **EP 1 249 919 B1**
(45) Date de publication et mention de la délivrance du brevet: **15.03.2006**
(21) Numéro de dépôt: 02291384.2
(22) Date de dépôt: 17.04.2001
(51) Int. Cl.: H02K 1/27, H02K 1/14, H02K 21/16, H02K 1/18, H02K 11/00, H02K 29/08, H02K 3/18, H02K 3/52, H02K 15/03

(54) **Rotor de machine electrique tournante**
Rotor einer rotierenden elektrischen Maschine
Rotor of a rotating electrical machine

(30) Priorité: 03.05.2000 FR 0005639; 20.02.2001 FR 0102263
(43) Date de publication de la demande: 16.10.2002
(62) Demande divisionnaire de: 01400981.5
(73) Titulaire: MOTEURS LEROY-SOMER, 16000 Angouleme (FR)
(72) Inventeur: Coupart, Eric, 16000 Angoulème (FR); Gauthier, Pascal, 16290 Asnières-Sur-Nouere (FR); Saint-Michel, Jacques, 16000 Angoulème (FR); Gilles, Christophe, 16000 Angoulème (FR); Eydelie, André, 16710 Saint Yrieix (FR); Jadeau, Laurent, 16110 La Rochefoucauld (FR); Augier, Philippe, 16430 Champniers (FR); Guillot, Jean-Marie, 16320 Blanzaguet-Saint-Cybard (FR)
(74) Mandataire: Tanty, François

(56) Documents cités:
- EP-A- 0 438 594
- FR-A- 2 784 815
- US-A- 4 339 874
- US-A- 5 091 668
- US-A- 5 162 686
- PATENT ABSTRACTS OF JAPAN vol. 2000, no. 08, 6 octobre 2000 (2000-10-06) & JP 2000 152537 A (CONCEPTION &DEV MICHELIN SA), 30 mai 2000 (2000-05-30)

## Description

La présente invention concerne les machines tournantes électriques et plus particulièrement les moteurs synchrones comportant un rotor à aimants permanents.

Les brevets US 4 302 693 et US 4 339 874 décrivent des rotors à concentration de flux, sans préciser la nature du stator. Dans ces rotors, les aimants présentent une forme de coin, étant disposés entre des pièces polaires soudées sur l'arbre du rotor. Il en résulte une fabrication relativement complexe du rotor. De plus, en cas de rotation du rotor à des vitesses élevées, les aimants exercent sur les pièces polaires des forces de cisaillement susceptibles de provoquer leur détachement, en cas de fixation de mauvaise qualité. Ces rotors, assez anciens, n'ont pas connu à la connaissance de la demanderesse de développement commercial important.

On connaît par la demande EP-A-0 872 943 une machine électrique tournante dont le rotor comprend des aimants déposés en surface sur le rotor et le circuit magnétique du stator reçoit des bobines individuelles. Une telle machine n'est pas prévue pour tourner à des vitesses de rotation élevées car les courants induits à la surface du rotor aux grandes vitesses tendent à échauffer les aimants, lesquels ne résistent pas à des températures élevées. A titre d'exemple, lorsque ces aimants sont montés en surface sans être fractionnés, la vitesse limite de rotation est par exemple de l'ordre de 200 trs/mn pour un rotor à 16 pôles et 400 trs/mn pour un moteur à 8 pôles, ce qui s'avère insuffisant pour certaines applications. Une solution pour éviter l'échauffement des aimants consiste à les fractionner mais cela complique la fabrication et augmente le coût. De plus, le nombre d'aimants à prévoir, en cas de fractionnement, croît avec le carré de la vitesse, de sorte qu'outre son coût, cette solution devient physiquement inapplicable dès que la vitesse demandée est relativement élevée, par exemple supérieure à quelques milliers de trs/mn. Par ailleurs, dans la machine décrite dans la demande EP-A-0 872 943, des aimants dédiés uniquement à la détection de la rotation du rotor sont montés sur celui-ci ce qui complique la fabrication du rotor. Le stator exerce sur le rotor des forces radiales diamétralement opposées, tournantes. Il en résulte une sollicitation mécanique du stator tendant à l'ovaliser, ce qui génère des vibrations et du bruit. Enfin, la largeur des dents est constante, ce qui présente deux inconvénients au moins. D'une part le matériau magnétique du stator est susceptible d'être saturé à la base des dents. D'autre part, le remplacement d'une bobine impose de procéder à une nouvelle imprégnation du stator, afin d'immobiliser correctement la bobine sur le stator, et la machine ne peut être réparée sur place et doit retourner chez le fabricant.

La demande EP-A-0 823 771 décrit un stator comportant un enroulement sur chaque dent. Le circuit magnétique du stator est formé par l'assemblage de secteurs définissant des entrefers à mi-largeur des encoches. Dans une telle machine, un effet de réluctance est recherché et obtenu en cherchant à maximiser la différence L_{d} - L_{q}, où L_{d} est l'inductance dans l'axe direct et L_{q} l'inductance dans l'axe en quadrature (notations conventionnelles). L'inconvénient est de générer des ondulations de couple. Par ailleurs, le découpage en secteurs tel que décrit dans la demande EP-A-0 823 771 fragilise le stator car les portées d'appui des secteurs les uns sur les autres sont relativement étroites. D'autre part, le flux magnétique traverse autant d'entrefers que de secteurs, diminuant le rendement de la machine.

Le brevet US 5 829 120 décrit un rotor à concentration de flux, comprenant des liaisons entre les pièces polaires pour faciliter le positionnement des aimants. Un tel rotor est relativement délicat à fabriquer, en raison de la présence de portions étroites de tôles à l'extérieur du rotor, pour tenir les pièces polaires, dans certaines réalisations.

Le brevet US 5 091 668 décrit également un rotor à concentration de flux, dans lequel les pièces polaires sont reliées à l'arbre du rotor par des liaisons à queue d'aronde et les aimants sont parallélépipédiques. Un tel rotor ne convient pas pour des vitesses de rotation élevées, car la force centrifuge a tendance à écarter les régions de chaque pièce polaire qui enserrent la nervure correspondante formée sur l'arbre. II est donc nécessaire d'engager les pièces polaires sur des barreaux solidaires de l'arbre. Une telle solution n'est toutefois pas entièrement satisfaisante, car outre le fait qu'elle complique la fabrication du rotor, les barreaux tendent à fléchir lorsque la longueur du rotor est importante et/ou la vitesse élevée.

Il existe un besoin pour disposer de machines tournantes électriques fiables, relativement puissantes, peu coûteuses à fabriquer, remédiant à tout ou partie des inconvénients mentionnés ci-dessus.

L'invention vise notamment à répondre à ce besoin.

Elle y parvient grâce à une nouvelle machine tournante électrique, notamment un nouveau moteur synchrone, comportant un rotor à concentration de flux, comprenant des aimants permanents disposés entre des pièces polaires, et un stator bobiné sur dents.

Dans un stator bobiné sur dents, chaque dent sert de noyau à un enroulement. De plus, le nombre de dents n_{dents} est de préférence fonction du nombre de paires de pôles nₚₐᵢᵣₑₛ et du nombre de phases nₚₕₐₛₑₛ suivant la formule n_{dents} = nₚₐᵢᵣₑₛ * nₚₕₐₛₑₛ. Le respect de cette relation permet de ne pas soumettre le stator à des contraintes tendant à l'ovaliser, contrairement à ce qui est décrit dans la demande EP-A-0 872 943 précitée.

La combinaison d'un rotor à concentration de flux et d'un stator bobiné sur dents permet d'avoir une machine relativement puissante sous un faible encombrement, ce qui autorise notamment le montage du moteur en porte-à-faux à l'extrémité d'un arbre, entraînant une diminution du nombre de roulements. Le rotor peut tourner à une vitesse élevée, car les aimants sont protégés du flux pulsant par les pièces polaires. Il n'est donc pas nécessaire d'utiliser des aimants fragmentés aux grandes vitesses, comme c'est le cas avec les rotors dont les aimants sont montés en surface.

L'utilisation d'un rotor à concentration de flux permet également de réaliser aisément les aimants et les pièces polaires avec une forme permettant de minimiser la différence L_{d} - L_{q}, donc à ne pas utiliser la réluctance pour générer la force motrice, contrairement à ce qui est l'objet de la demande EP-A-0 823 771 précitée, et les ondulations de couple sont donc minimes. Avantageusement, le rotor est réalisé de manière à ce que L_{d} soit sensiblement égal à L_{q}, en donnant notamment une forme bombée aux faces des pièces polaires tournées vers le stator.

Les aimants du rotor présentent avantageusement une forme de coin lorsque la machine est observée selon l'axe de rotation du rotor, de largeur diminuant en éloignement de l'axe géométrique de rotation du rotor, et les pièces polaires présentent des découpes et sont engagées par ces découpes sur des nervures de l'arbre et se trouvent fixées sur l'arbre par complémentarité de formes. La coopération entre d'une part les aimants en forme de coin et d'autre part les pièces polaires reliées à l'arbre par complémentarité de formes est particulièrement avantageuse en ce que les aimants peuvent, aux vitesses élevées, exercer sur les pièces polaires des forces de compression qui tendent à s'opposer à l'écartement des régions des pièces polaires situées de part et d'autre des nervures sur lesquelles elles sont engagées. Il devient ainsi possible d'éviter d'avoir à engager les pièces polaires sur des barreaux, à la différence de ce qui est décrit dans le brevet US 5 091 668 précité.

Les nervures précitées sont de préférence réalisées d'un seul tenant avec une partie centrale de l'arbre, fabriquée en matériau amagnétique par exemple en aluminium, en alliage d'aluminium, ou en acier amagnétique, ou en matériaux composites.

Des espaces sont de préférence ménagés entre les bords radialement intérieurs des pièces polaires et l'arbre, afin de faciliter la mise en place des aimants. Une telle structure se distingue de celle décrite dans la demande de brevet européen EP-A-0 327 470, dans laquelle les pièces polaires présentent des portées cylindriques venant en appui sur l'arbre.

Dans une réalisation particulière, des aimants en forme de coin étant utilisés, chaque nervure présente, en section transversale, un profil avec des côtés opposés ayant des parties inclinées par rapport à un rayon passant par le milieu de la nervure, par exemple inclinées d'un angle (ii) choisi de manière à permettre l'emploi, pour réaliser les nervures, d'un matériau moins résistant aux contraintes de cisaillement que celui utilisé pour réaliser les pièces polaires. L'angle (ii) est de l'ordre de 70° par exemple, lorsque l'arbre est réalisé en aluminium et les pièces polaires en acier. Le profil précité comporte avantageusement des parties arrondies, pour limiter les risques de fissuration. Ces parties arrondies peuvent présenter des rayons de courbure (Rₐ, R_{c}) différents.

Comme évoqué plus haut, les pièces polaires peuvent avantageusement présenter chacune, sur leur côté tourné vers le stator, une face bombée, convexe vers le stator. Le rotor présente alors des lobes à sa périphérie, ce qui permet de réduire les ondulations de couple (ripple) comme expliqué ci-dessus, de crantage (cogging) et de créer un courant d'air de refroidissement.

Dans une réalisation particulière, le rotor comporte au moins une joue d'extrémité en un matériau amagnétique, dont la périphérie s'étend en retrait du bord des aimants qui est adjacent au stator. Une telle disposition facilite la détection du champ magnétique des aimants, comme cela sera précisé plus loin, et permet de pouvoir utiliser des détecteurs de champ magnétique sans avoir à rapporter sur le rotor des aimants dédiés uniquement à la mesure de la rotation de celui-ci, à la différence de ce qui est décrit dans la demande EP-A- 0 872 943 précitée.

Dans une réalisation particulière, le stator comporte des bobines individuelles. Cela facilite la construction et l'entretien de la machine.

Le stator peut ainsi comporter au moins une bobine individuelle comportant un faisceau de fils isolés, ce faisceau étant sensiblement plat et enroulé autour d'un axe géométrique d'enroulement de manière à former une pluralité de spires superposées, la section transversale du faisceau, au niveau des spires superposées, ayant une grande dimension orientée sensiblement perpendiculairement à l'axe d'enroulement de la bobine. Les fils sont de préférence de section circulaire, de diamètre compris par exemple entre 0,3 mm et 2,5 mm ; cette configuration permet de réduire les pertes par haute fréquence à l'intérieur du cuivre aux vitesses de rotation élevées du rotor.

La section intérieure de la bobine est de préférence sensiblement rectangulaire. Elle est avantageusement plus large d'un côté que de l'autre, de façon à permettre son montage sur une dent présentant un profil complémentaire avec un certain effet de serrage. Cet effet de serrage est particulièrement utile pour contribuer à immobiliser une bobine de remplacement préimprégnée, montée sur le stator, sans qu'il soit nécessaire de procéder à une nouvelle imprégnation de ce dernier par une résine isolante. Un tel effet de serrage n'est pas possible avec la machine décrite dans la demande de brevet EP-A- 0 872 943, dans laquelle les dents présentent une largeur constante. De plus, un autre avantage à avoir des dents dont la largeur croît à partir d'une certaine distance de leur extrémité libre en s'éloignant du rotor réside dans la diminution du risque de saturation des tôles magnétiques utilisées, en raison de la section plus grande offerte aux lignes de champ magnétique. Il est ainsi possible d'utiliser un matériau magnétique moins coûteux.

Dans une réalisation particulière, les fils sont dénudés aux extrémités de connexion électrique de la bobine et recourbés pour former des crochets. Cela permet notamment de faciliter la mise en place de la bobine et son remplacement. Lesdits crochets peuvent être dirigés vers un plan médian de la bobine, perpendiculaire à l'axe d'enroulement.

Les extrémités de connexion recourbées en forme de crochet sont avantageusement soudées sur des portions localement dénudées de câbles électriques gainés.

La bobine présente avantageusement une section intérieure dont la dimension du grand côté est supérieure à la dimension axiale de la dent sur laquelle elle est engagée, afin de ménager un espace suffisant pour permettre le passage d'un détecteur permettant de délivrer un signal représentatif de la rotation du rotor.

La machine comporte ainsi avantageusement au moins un détecteur de champ magnétique, monté sur le stator de manière à détecter le champ magnétique des aimants du rotor depuis un emplacement venant en recouvrement, lorsque la machine est observée selon l'axe de rotation du rotor, d'une région périphérique du rotor. Cette région périphérique est avantageusement celle s'étendant autour d'une joue d'extrémité située en retrait du bord radialement extérieur des aimants, comme indiqué plus haut.

Le courant étant à *n* phases, la machine comporte de préférence *n* détecteurs montés sur *n* dents consécutives à proximité d'une ouïe d'un carter de la machine. Ce ou ces détecteurs peuvent être fixés sur une face frontale du circuit magnétique du stator et s'étendre chacun selon l'axe radial de la dent correspondante. Ils traversent avantageusement les bobines engagées sur les dents, comme mentionné plus haut. La machine gagne ainsi en compacité.

Les détecteurs peuvent comporter chacun, en plus d'un capteur de champ magnétique, un capteur de température, et l'emplacement du capteur de température, entre la bobine et la dent, permet de donner une bonne image de la température réelle du circuit électrique de la phase correspondante.

Dans une réalisation particulière, les dents du stator comportent des découpes permettant de fixer sur le stator des cales de maintien de bobines individuelles montées sur les dents, chaque cale comportant une cloison séparatrice s'étendant sensiblement au milieu de l'encoche correspondante.

Toujours dans une réalisation particulière, le circuit magnétique du stator comporte des secteurs assemblés, définissant des entrefers coupant les dents à mi-largeur. Ces secteurs présentent avantageusement des reliefs coopérant sur leurs côtés d'accostage. La fabrication du circuit magnétique du stator avec des secteurs découpés permet notamment de diminuer les chutes. La présence des entrefers à mi-largeur des dents permet également de ne pas couper les lignes de champ magnétique qui circulent entre deux demi dents d'un même secteur. En outre, les portées d'appui sont de plus grande dimension que dans le cas où les entrefers se situent à mi-largeur des encoches, ce qui est notamment le cas de la machine décrite dans la demande EP-A-823 771. Cela permet d'améliorer le maintien des secteurs et rend possible d'assurer leur cohésion par simple insertion à force dans un carter cylindrique.

L'invention a encore pour objet un rotor de machine tournante électrique, comprenant une pluralité de masses polaires et une pluralité d'aimants assujettis aux masses polaires et fixés dans des logements du rotor formés entre les masses polaires, caractérisé par le fait que :
a) les masses polaires sont agencées de manière à ce que lesdits logements s'élargissent sous l'effet de la force centrifuge lorsque le rotor tourne à une vitesse supérieure à une vitesse prédéterminée, cet élargissement tendant à diminuer lorsque la vitesse de rotation diminue,
b) les aimants sont agencés pour s'engager dans les intervalles formés par l'élargissement des logements lorsque le rotor tourne à une vitesse supérieure à ladite vitesse prédéterminée, de sorte que les masses polaires enserrent les aimants lorsque la vitesse du rotor redescend en deçà de ladite vitesse prédéterminée. Les masses polaires peuvent être disposées sur des nervures de l'arbre ou des barreaux rapportés, rendus solidaires de l'arbre.

Chaque nervure est avantageusement apte à coopérer par complémentarité de formes avec une découpe correspondante réalisée sur la masse polaire associée, comme expliqué plus haut. Il en résulte un maintien amélioré des masses polaires sur l'arbre du rotor, grâce aux forces induites sur les masses polaires par la forme en coin des aimants.

D'autres avantages de la présente invention ressortiront à la lecture de la description détaillée qui va suivre, d'exemples de réalisation non limitatifs de l'invention, et à l'examen du dessin annexé, ce dernier faisant partie intégrante de la description, sur lequel :
- La figure 1 est une vue schématique en perspective d'un moteur synchrone conforme à un exemple de mise en oeuvre de l'invention,
- la figure 2 est une vue schématique de dessus selon la flèche II de la figure 1,
- la figure 3 est une coupe axiale schématique du moteur selon III-III de la figure 2,
- la figure 4 est une vue agrandie du détail IV de la figure 2,
- la figure 5 représente isolément, en perspective et d'une manière schématique, le stator,
- la figure 6 représente isolément, en perpective, un secteur du circuit magnétique du stator,
- la figure 7 illustre l'assemblage du secteur de la figure 6 avec un secteur identique,
- la figure 8 représente isolément, en perspective, une bobine individuelle,
- la figure 9 est une section selon IX-IX de la figure 8,
- la figure 10 représente de manière schématique un chapelet de bobines utilisé pour la fabrication du stator,
- la figure 11 illustre de manière schématique la mise en place des chapelets de bobines sur le stator, au cours de la fabrication du stator,
- la figure 12 est une vue analogue à la figure 11, très schématique et simplifiée, tous les chapelets ayant été mis en place, pour illustrer le trajet circulaire des câbles d'amenée du courant,
- la figure 13 est une vue schématique de face du rotor,
- la figure 14 représente isolément, en vue de face, l'arbre du rotor,
- la figure 15 est une section axiale schématique selon XV-XV de la figure 14,
- la figure 16 représente isolément, en vue de dessus, une pièce polaire du rotor,
- la figure 17 illustre l'assemblage des pièces polaires sur l'arbre du rotor,
- la figure 18 est une section transversale, schématique, de l'arbre du rotor après mise en place des aimants et des pièces polaires,
- la figure 19 est un schéma non limitatif donnant un exemple de connexion électrique des bobines (numérotées de 1 à 12) entre elles,
- la figure 20 est une coupe transversale schématique d'une variante de réalisation du rotor, et,
- la figure 21 représente un détail de la figure 20.

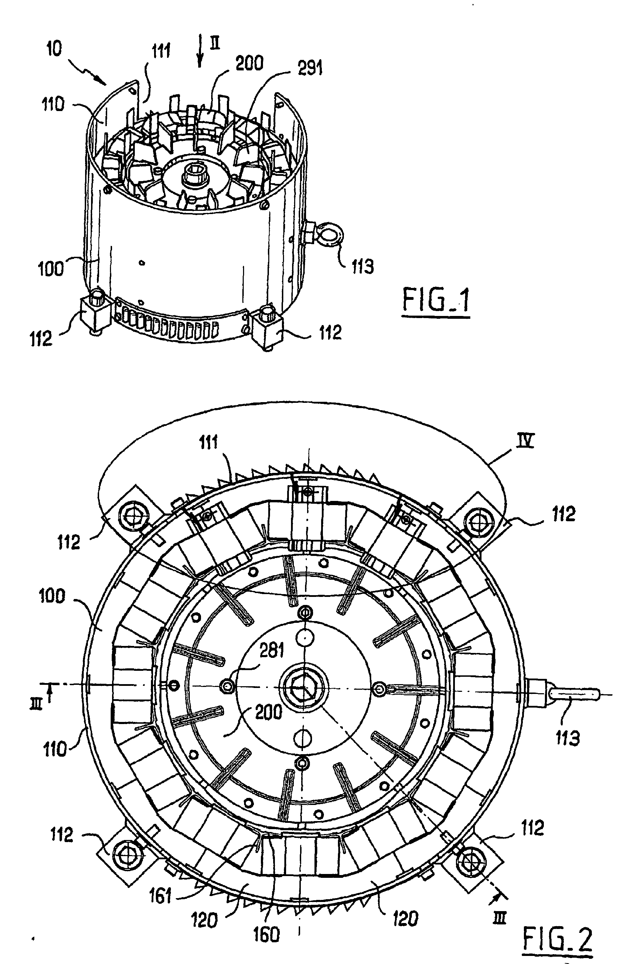

On a représenté aux figures 1 à 4 un moteur synchrone 10 conforme à l'invention, comportant un stator 100 et un rotor 200. Le moteur 10 est sans balais, à rotor à concentration de flux et à stator bobiné sur dents, et fonctionne en courant triphasé.

Le stator 100 comporte un carter 110 en acier, présentant une ouïe latérale 111 pour le passage notamment des conducteurs électriques d'alimentation des enroulements du stator. Le carter est muni, extérieurement, de pattes de fixation 112 et d'un crochet de levage 113.

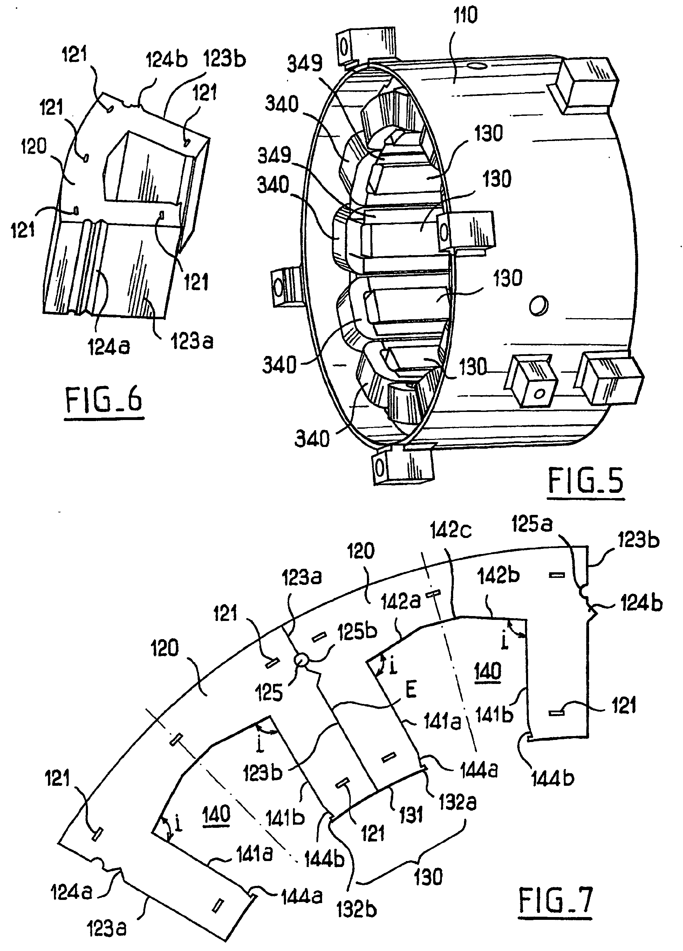

Le stator 100 comporte un circuit magnétique comprenant, dans l'exemple représenté, une pluralité de secteurs 120 identiques, dont l'un d'eux est représenté isolément en perpective à la figure 6.

Chaque secteur 120 est constitué par un paquet de tôles magnétiques identiques superposées et clipsées entre elles de manière à constituer un ensemble unitaire, le clipsage étant obtenu selon une technique connue en elle-même grâce à des déformations ponctuelles de chaque tôle en plusieurs points d'accrochage 121. L'utilisation d'un paquet de tôles magnétiques permet de limiter les pertes par courants induits. En variante, le circuit magnétique du stator pourrait être formé par la superposition de tôles, chacune de forme générale annulaire, dans lesquelles seraient découpées toutes les dents 130 du stator. En variante encore, les secteurs pourraient comporter plusieurs dents chacun. Deux secteurs 120 forment, lorsqu'assemblés, une dent 130 de largeur non constante, servant au montage d'une bobine individuelle 340, comme on peut le voir sur la figure 5 notamment. Le nombre de dents n_{dents} est dans l'exemple décrit égal à 12, le moteur étant destiné à être alimenté en courant triphasé et le rotor comportant 8 pôles. Bien entendu, le nombre de pôles du rotor pourrait être différent et notamment être égal à 12 ou 16 par exemple. Le stator pourrait encore, bien que cela présente certains inconvénients comme expliqué plus haut, avoir un nombre de dents au stator qui ne soit pas lié au nombre de paires de pôles nₚₐᵢᵣₑₛ du rotor et au nombre de phases nₚₕₐₛₑₛ par la relation n_{dents} = nₚₐᵢᵣₑₛ * nₚₕₐₛₑₛ.

Chaque secteur 120 comporte, sur ses côtés 123a et 123b destinés à coopérer avec les secteurs 120 adjacents, des reliefs respectifs 124a et 124b. Ces reliefs 124a et 124b présentent des formes complémentaires, avec un profil généralement triangulaire en vue de dessus, l'un en creux l'autre en saillie, avec deux côtés sensiblement rectilignes reliés par un arrondi. La coopération des reliefs 124a et 124b contribue au bon positionnement des secteurs 120 entre eux lors de l'assemblage du circuit magnétique du stator. Chaque secteur 120 comporte également, sur ses côtés 123a et 123b, des gorges 125a et 125b respectives, chacune de section transversale demi-circulaire, situées dans le voisinage des reliefs 124a et 124b, et formant des trous 125 de section circulaire lorsque les secteurs 120 sont assemblés. Ces trous 125 servent au montage de trois détecteurs 190, comme cela sera précisé dans la suite.

On remarquera sur la figure 7 que l'entrefer E, à l'interface entre deux secteurs 120 adjacents, passe par le milieu de la dent 130 correspondante, ce qui permet de réduire les pertes magnétiques puisque le flux magnétique peut circuler sans rencontrer d'entrefer d'une demi dent à la demi dent adjacente d'un même secteur 120, lors du fonctionnement de la machine. De plus, les secteurs peuvent être réalisés avec des éléments découpés pratiquement sans chute avec des outils de taille relativement petite, donc capables de grandes cadences.

L'ensemble des secteurs 120 est inséré à force dans le carter cylindrique 110 et la cohésion du circuit magnétique formé par l'ensemble des secteurs 120 est assurée par les forces de compression radiales exercées par le carter 110 sur les secteurs 120, les portées d'appui des secteurs entre eux étant relativement grandes.

Chaque secteur 120 définit une encoche 140 dont les côtés opposés 141a et 141b font chacun un angle i de plus de 90° avec les régions adjacentes 142a et 142b du fond de l'encoche 140, elles-mêmes perpendiculaires aux rayons passant par la ligne de raccordement de la dent concernée avec le fond de l'encoche. Dans l'exemple de réalisation décrit, l'angle i vaut 90,4°, cette valeur n'étant bien entendu qu'un exemple.

Les côtés 123a et 123b des secteurs sont généralement alignés chacun avec un rayon, hormis les reliefs 124a, 124b, 125a et 125b, et la largeur de chaque dent 130 croît nettement, hormis des découpes 144a ou 144b réalisées à proximité de son extrémité libre 131 tournée vers le rotor, au fur et à mesure que l'on s'éloigne du rotor. On remarquera à l'examen de la figure 7 que chaque dent 130 ne comporte pas, dans le voisinage de son extrémité libre 131, d'épanouissements polaires, contrairement à un grand nombre de stators connus qui présentent des encoches semi-fermées. Dans l'exemple représenté, les parties d'extrémité 132a et 132b de chaque dent 130, situées entre son extrémité libre 131 et les découpes 144a ou 144b, sont alignées avec les côtés 141a et 141b, respectivement.

L'extrémité libre 131 est une portion de cylindre de révolution, de même axe que l'axe de rotation du rotor, et concave vers le rotor.

Le fond de chaque encoche comporte une région médiane 142c reliant les régions 142a et 142b et perpendiculaire à un rayon coupant l'encoche 140 à mi-largeur, représenté en trait discontinu sur la figure 7.

Comme mentionné précédemment, chaque dent 130 reçoit une bobine individuelle 340, occupant dans chaque encoche 140 adjacente à la dent 130 considérée, sensiblement la moitié du volume de cette encoche.

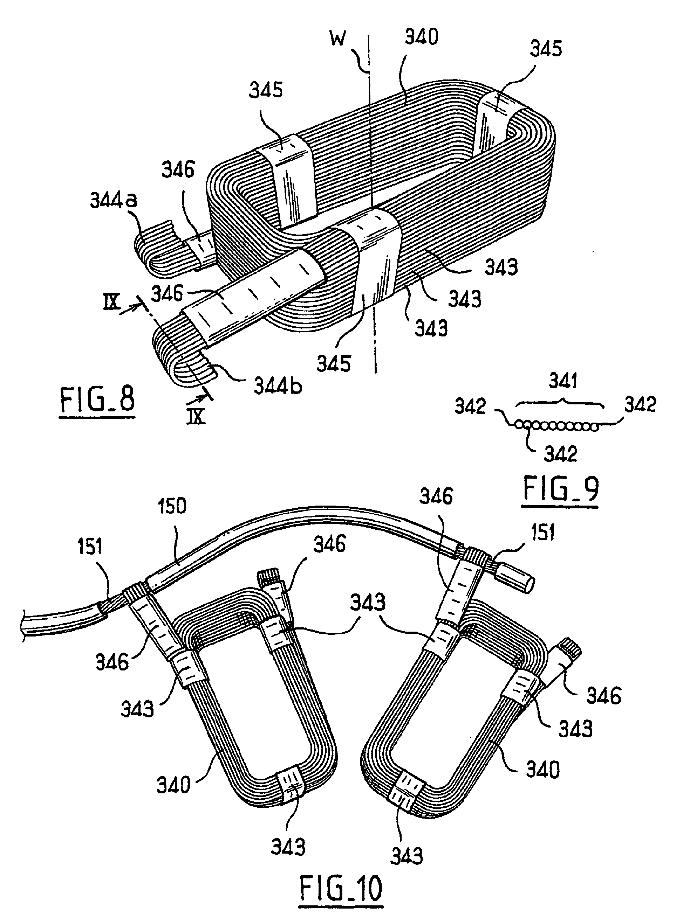

On a représenté isolément à la figure 8 une bobine individuelle 340. Celle-ci est formée par l'enroulement autour d'un axe géométrique d'enroulement W d'un faisceau 341 de fils électriques émaillés 342, ce faisceau étant sensiblement plat en section transversale, comme on peut le voir sur la figure 9.

Lorsque le faisceau 341 est observé en section transversale au niveau des spires, sa plus grande dimension est orientée sensiblement perpendiculairement à l'axe d'enroulement W.

Dans l'exemple considéré, le faisceau 341 comporte une dizaine de conducteurs individuels 342, chacun de section circulaire. Le faisceau 341 forme une vingtaine de spires 343 superposées. Les conducteurs 342 sont isolés électriquement les uns des autres au niveau des spires grâce à l'utilisation de fil émaillé. Les conducteurs 342 sont dénudés à leurs extrémités pour former des extrémités de connexion électrique 344a et 344b, recourbées chacune en forme de crochet vers un plan médian de la bobine, perpendiculaire à l'axe d'enroulement W. Ces crochets, à la fin du processus de fabrication de la bobine, sont ouverts vers le corps de celle-ci.

On voit sur la figure 8 que tous les conducteurs 342 de l'extrémité 344a sont recourbés vers le haut puis vers le corps de la bobine tandis que les fils de l'extrémité 344b sont recourbés vers le bas puis vers le corps de la bobine. Les extrémités 344a et 344b ne font sensiblement pas saillie hors du plan des deux faces d'extrémité de la bobine. Les spires qui constituent le corps de la bobine peuvent être maintenues à l'état superposé, avant imprégnation par une résine, par des bandes de toile adhésive 345. Des manchons de gaine isolante 346 sont engagés sur les parties du faisceau 341 s'étendant entre les extrémités 344a et 344b et le corps de la bobine.

La section intérieure de la bobine 340 présente une forme générale rectangulaire, comme on peut le voir sur la figure 10. Les bobines 340 sont bobinées sur des formes comportant deux grandes faces opposées planes faisant entre elles le même angle que les côtés 141a et 141b d'une dent, de sorte que la largeur de la section intérieure de chaque bobine varie sensiblement d'une face d'extrémité à la face opposée. On peut s'en apercevoir en essayant de monter une bobine à l'envers sur une dent 130 du stator 100.

On peut voir sur la figure 10 que les bobines 340 sont reliées électriquement par une extrémité de connexion électrique 344a ou 344b à des conducteurs électriques gainés 150, partiellement dénudés, avant d'être montées sur les dents 130 du stator 100. Les crochets formés par les extrémités 344a et 344b sont par exemple agencés de manière à épouser sensiblement le diamètre extérieur des conducteurs électriques 150 dans les parties dénudées 151. Ces parties dénudées peuvent être formées non seulement aux extrémités des conducteurs électriques 150 mais encore entre ces dernières, par enlèvement sur une longueur limitée de la gaine isolante en matière plastique.

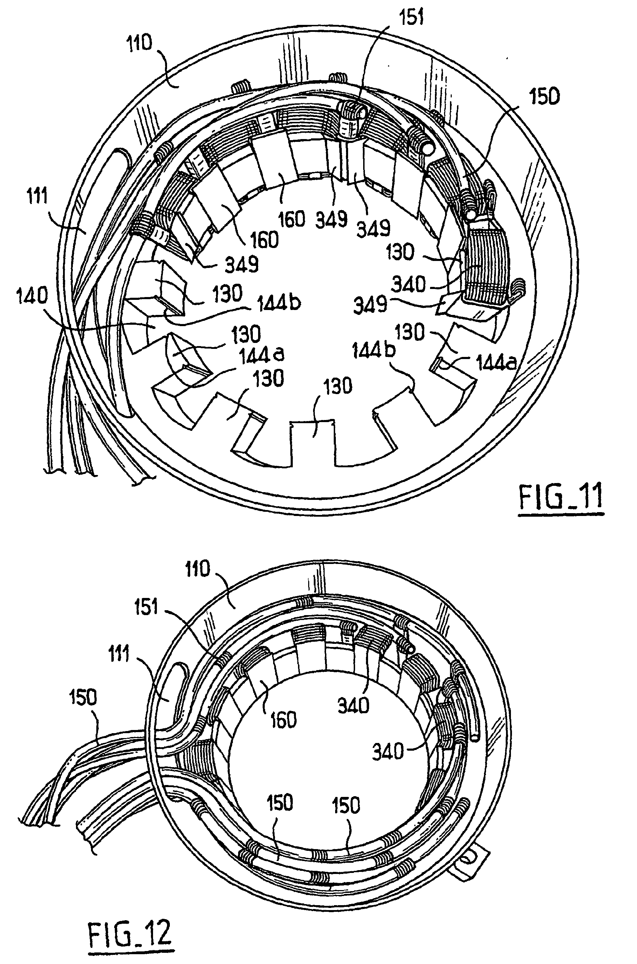

Dans l'exemple décrit, on forme des chapelets de deux bobines 340 qui sont ensuite montés sur les dents 130 correspondantes, comme illustré à la figure 11. Des feuilles 349 d'isolant sont interposées entre les dents et le fond des encoches et les bobines. On peut voir les extrémités de ces feuilles 349 sur les figures 5 et 11.

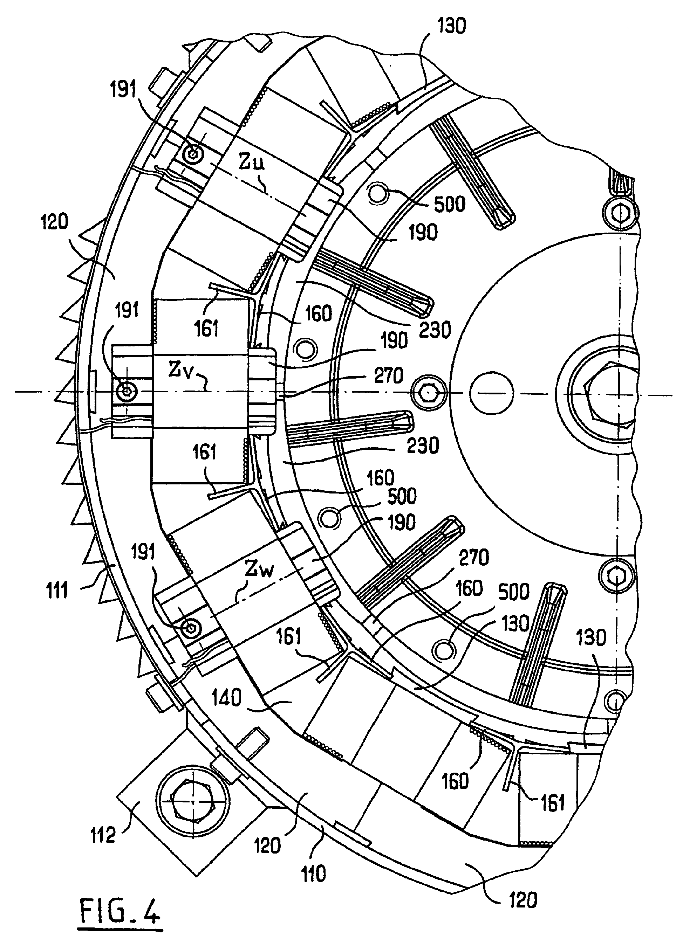

Au fur et à mesure du montage des bobines 340 sur les dents 130, des cales de maintien 160 sont glissées dans les découpes 144a, 144b pour fermer les encoches 140. Ces cales 160 comportent, comme on peut le voir sur la figure 4, des cloisons 161 s'étendant entre les parties des deux bobines 340 logées dans l'encoche 140 concernée.

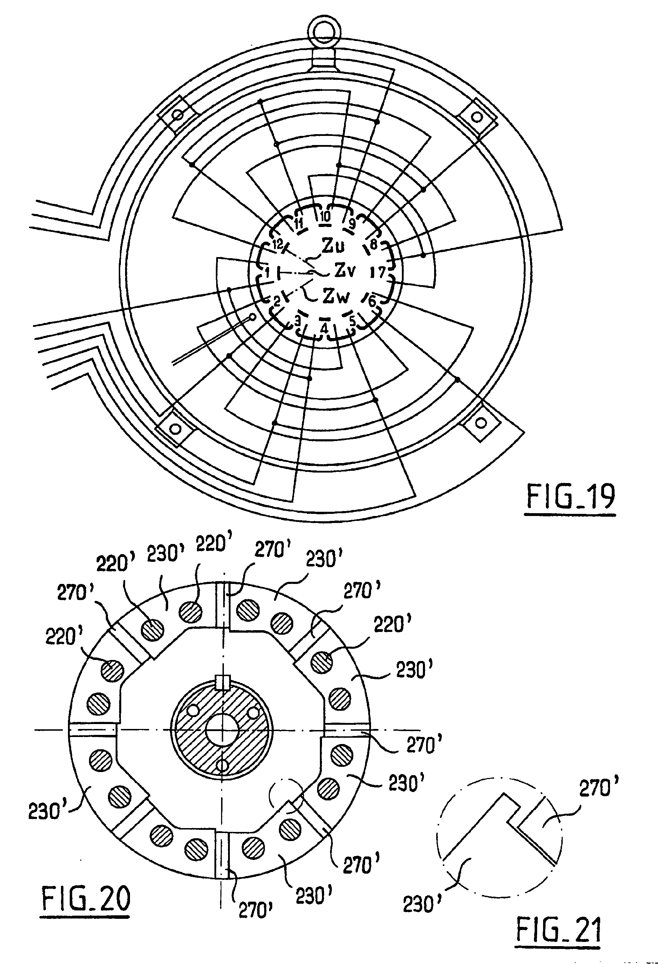

Une fois toutes les bobines 340 mises en place, les câbles 150 s'étendent suivant des trajets sensiblement circulaires d'un côté du circuit magnétique du stator, en retrait des extrémités libres 131 des dents, comme représenté à la figure 12, ces câbles étant attachés entre eux par des colliers, et l'on procède à l'imprégnation du stator avec une résine isolante, de manière conventionnelle. Le schéma précis de connexion électrique des douze bobines entre elles est donné à la figure 20, mais il ne s'agit que d'un exemple.

On comprend que l'utilisation de bobines individuelles 340, installées de la manière qui vient d'être décrite, sur des dents de largeur non constante, est particulièrement avantageuse car elle facilite grandement le remplacement des bobines 340. En effet, pour remplacer une bobine 340 il suffit, rotor 200 enlevé, de dessouder les extrémités 344a et 344b d'une bobine des portions dénudées 151 correspondantes, d'enlever les cales 160 concernées et d'extraire la bobine 340. Une bobine 340 de remplacement, imprégnée de résine, peut être ensuite mise en place en étant engagée sur la dent 130 précédemment libérée, puis ses extrémités 344a et 344b soudées sur les portions dénudées 151. La convergence des côtés 141a et 141b de la dent 130 vers le rotor et la forme correspondante de la section intérieure de la bobine contribuent à son immobilisation sur la dent 130. La réparation peut se faire sur place, sans avoir à renvoyer la machine chez le fabricant, et sans avoir à procéder à une nouvelle imprégnation du stator, ce qui permet de raccourcir le temps de réparation. Le moteur 10 peut avantageusement être livré avec une ou plusieurs bobines 340 de remplacement.

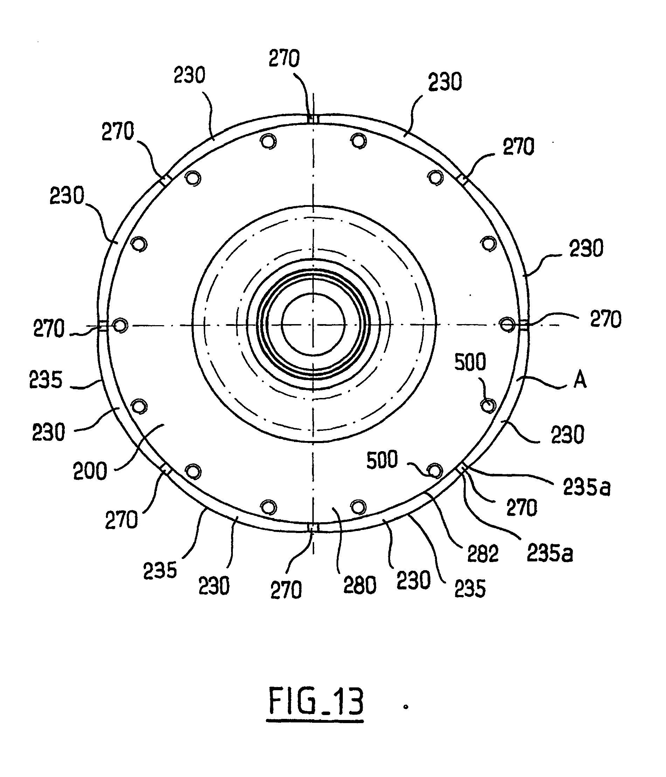

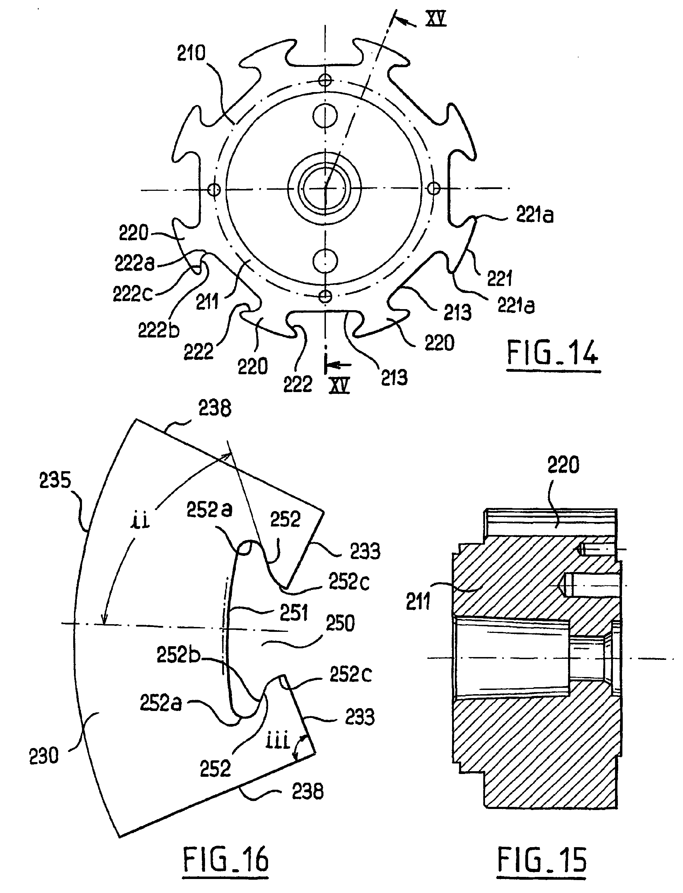

On va maintenant décrire, en référence aux figures 13 à 18, le rotor 200. Celui-ci comporte un arbre 210 amagnétique, représenté isolément en vue de face sur la figure 15, comportant une partie centrale 211, de forme générale annulaire, et à sa périphérie une pluralité de nervures 220 servant à l'accrochage de pièces polaires 230 constituées chacune par un paquet de tôles magnétiques identiques superposées et clipsées. L'utilisation de tôles magnétiques superposées permet de réduire les pertes par courants induits. Les nervures 220 présentent en section transversale une forme générale de T. Les pièces polaires 230 ne sont pas reliées magnétiquement entre elles, compte tenu de l'utilisation d'un matériau amagnétique pour réaliser l'arbre.

On a représenté isolément, en vue de dessus, une pièce polaire 230 sur la figure 16. Chaque pièce polaire 230 présente une découpe 250 ayant une forme adaptée à s'engager sur une nervure 220, par coulissement parallèlement à l'axe de rotation du rotor. Les nervures 220 sont réalisées d'un seul tenant avec la partie centrale 211, en aluminium, par usinage dans l'exemple considéré, mais d'autres techniques telles que le tréfilage ou l'injection pourraient être utilisées. On remarquera que les pièces polaires 230, dans l'exemple décrit, ne sont pas engagées sur autre chose que les nervures de l'arbre. Les nervures 220 pourraient être remplacées par des barreaux rapportés, rendus solidaires de joues d'extrémités, lorsque le rotor est relativement court ou n'est pas destiné à tourner à une vitesse élevée, comme cela sera expliqué plus loin.

Dans l'exemple de réalisation décrit, la découpe 250 est symétrique par rapport à un plan médian passant par son milieu et contenant un rayon. Elle comporte un fond 251 qui est destiné à venir au contact de la face radialement extérieure 221 de la nervure 220 correspondante. Le fond 251 se raccorde à des côtés opposés 252, présentant chacun une première partie arrondie 252a, de rayon de courbure Rₐ, une partie intermédiaire rectiligne oblique 252b faisant un angle non nul ii avec le rayon passant par le milieu du fond 251 et une deuxième partie arrondie 252c, de rayon de courbure R_{c}. Dans l'exemple de réalisation décrit, Rₐ vaut 3mm, R_{c} vaut 5mm et l'angle ii vaut 70°. La découpe 250 présente une ouverture rétrécie, ce qui permet l'accrochage sur une nervure 220.

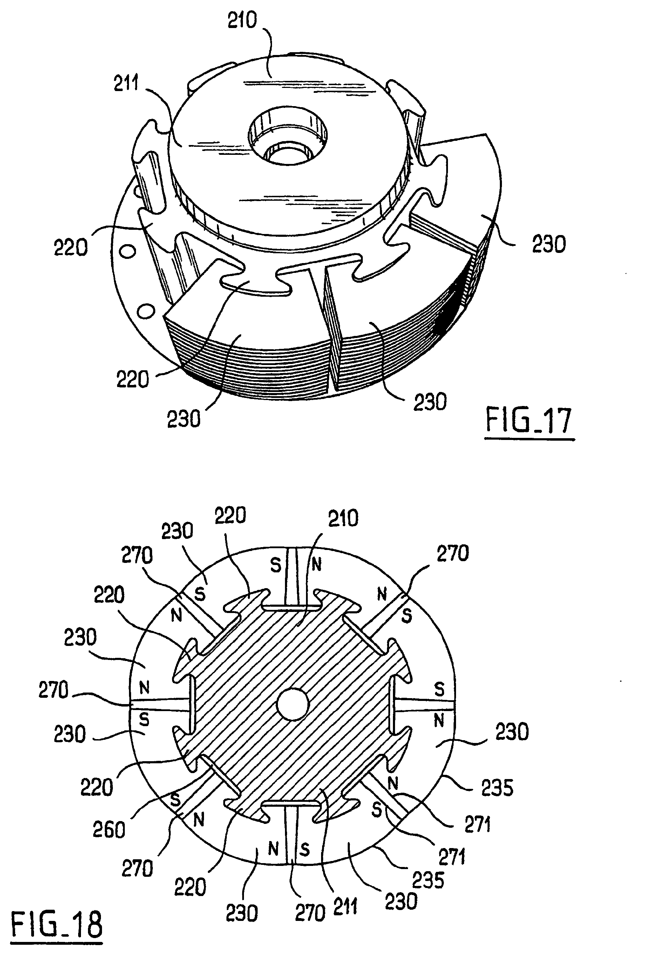

D'une manière générale, l'angle ii dépendra de la nature des matériaux employés pour réaliser l'arbre 210 et les pièces polaires 230, et pourra être déterminé par un calcul par éléments finis. La forme de la section de chaque nervure 220 est sensiblement complémentaire de celle de la découpe 252, hormis la présence d'un chanfrein 221 a en bordure de la face radialement extérieure 221 de la nervure 220. Chaque côté 222 de la nervure comporte ainsi une partie arrondie 222a de même rayon de courbure Rₐ que la partie arrondie 252a, une partie rectiligne 222b parallèle à la partie 252b lorsque la pièce polaire 230 est en place sur l'arbre 210 et une partie arrondie 222c de même rayon de courbure R_{c} que la partie 252c. Les bords radialement intérieurs 233 de la pièce polaire 230, situés de part et d'autre de l'encoche 250, s'étendent en retrait des régions 213 de l'arbre 210 situées entre les nervures 220, comme on peut le voir sur les figures 17 et 18 notamment. Un espace libre 260 est ainsi ménagé entre deux nervures 220 adjacentes, les pièces polaires 230 engagées sur ces nervures et l'arbre 210.

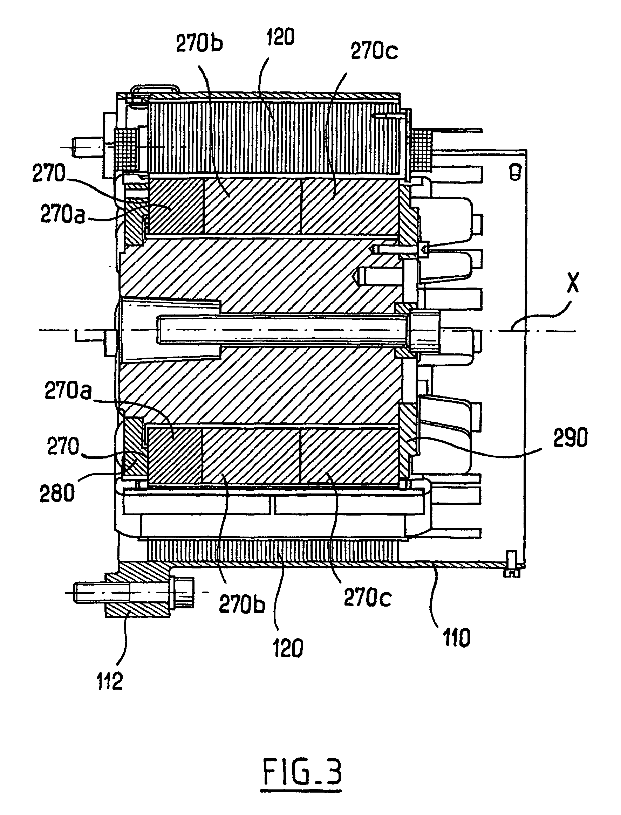

Des aimants permanents 270 de section légèrement trapézoïdale sont disposés radialement, étant insérés entre les pièces polaires 230, comme représenté sur la figure 18. Chaque aimant 270 présente, lorsque observé selon l'axe de rotation du rotor, une forme légèrement en coin, sa largeur diminuant en allant radialement vers l'extérieur. Chaque aimant 270 qui présente une aimantation transverse peut être monobloc ou être constitué par plusieurs éléments magnétiques mis bout à bout. Les pôles magnétiques de même polarité de deux aimants 270 adjacents sont dirigés vers la pièce polaire 230 située entre ces aimants 270, comme illustré sur la figure 18. Dans l'exemple considéré, chaque aimant 270 est constitué par trois éléments magnétiques 270a, 270b et 270c mis bout à bout dans le sens de l'axe X de rotation du rotor, comme on peut le voir sur la figure 3. Dans l'exemple représenté, les aimants 270 s'étendent sur pratiquement toute la dimension radiale des côtés 238 des pièces polaires 230 et à leur contact.

L'angle que font entres elles les faces planes opposées des aimants 270 venant au contact des pièces polaires 230 est relativement faible, de quelques degrés. L'angle iii entre le côté 238 d'une pièce polaire 230 et le bord 233 adjacent est égal dans l'exemple représenté à la figure 16 à 92,4°.

Le côté radialement extérieur 235 d'une pièce polaire 230 est de section transversale circulaire, de rayon de courbure inférieur au rayon maximum du rotor, de telle sorte que chaque pièce polaire 230 présente une face extérieure 235 qui forme un lobe légèrement convexe vers l'extérieur, comme on peut le voir sur la figure 18. La forme bombée des pièces polaires 230 permet de diminuer les ondulations de couple et de créer un courant d'air de refroidissement. Dans l'exemple décrit, la forme des lobes 235 et le ratio de la dimension radiale des aimants à leur largeur est choisi de manière à avoir L_{q} = L_{d}, de sorte que le moteur tourne sans effet de réluctance.

Les logements formés entre les pièces polaires 230, et dans lesquels sont placés les aimants 270, tendent à s'élargir sous l'effet de la force centrifuge lorsque le rotor 200 tourne à une vitesse supérieure à une vitesse prédéterminée, compte tenu de l'élasticité des matériaux utilisés, cet élargissement tendant à diminuer lorsque la vitesse de rotation diminue.

Les aimants 270 ont une dimension radiale choisie de telle sorte que lorsqu'ils sont mis en place dans les logements correspondants du rotor, leur extrémité radialement extérieure se situe en retrait du bord radialement extérieur, adjacent aux aimants, des pièces polaires.

Les aimants 270 sont agencés pour s'engager dans les intervalles formés par l'élargissement des logements précités lorsque le rotor tourne à une vitesse supérieure à ladite vitesse prédéterminée, de sorte que les pièces polaires 230 enserrent les aimants 270 lorsque la vitesse du rotor redescend en deçà de ladite vitesse prédéterminée. La présence des espaces 260 facilite la mise en place des aimants 270. On comprend que l'on dispose ainsi d'un moyen simple et efficace pour assujettir les aimants 270 aux pièces polaires 230. Pour fixer les aimants 270, on peut faire tourner le rotor 200 à une vitesse par exemple supérieure de 10 % à sa vitesse de rotation nominale, voire à une vitesse supérieure de 20 % à celle-ci. Les aimants 270 sont facilement mis en place, puisqu'il n'est pas nécessaire de les insérer initialement entre les pièces polaires 230 avec une force importante, la mise en position définitive des aimants 270 s'effectuant d'elle-même lorsque le rotor 200 est entraîné en rotation. De plus, en faisant tourner plus ou moins vite le rotor, on peut si nécessaire obtenir un déplacement plus ou moins grand des pièces polaires 230 et des aimants 270 et agir légèrement sur le diamètre extérieur du rotor. Cela peut permettre de réaliser les aimants 270 et les pièces polaires 230, ainsi que le stator 100, avec des tolérances de fabrication plus larges, puisqu'il est possible d'ajuster le diamètre extérieur du rotor 200 à une valeur souhaitée en le faisant tourner plus ou moins vite.

Les aimants 270 présentent une résistivité électrique peu élevée, mais ne sont pas soumis à un échauffement risquant de les démagnétiser grâce à la protection conférée vis-à-vis du flux pulsant par les pièces polaires 230, aux vitesses élevées.

La forme en coin des aimants 270 permet d'exercer sur les parties des pièces polaires 230 qui enserrent les nervures 220 des forces de compression qui tendent à refermer les découpes 250 sur les nervures 220, et ce d'autant plus que la vitesse est élevée, de sorte que l'ensemble est auto bloquant. Les forces de compression précitées permettent de réduire la largeur des parties des pièces polaires situées de part et d'autre d'une nervure, donc de bénéficier d'une largeur plus importante au niveau du raccordement de la nervure à l'arbre et d'utiliser pour réaliser cette dernière un matériau moins résistant mécaniquement que l'acier amagnétique, mais moins coûteux et plus léger, tel que l'aluminium.

Des joues d'extrémités 280 et 290 sont fixées sur l'arbre 210 de part et d'autre de celui-ci, pour bloquer axialement en tant que besoin les pièces polaires 230 et les aimants 270. Ces joues définissent un étage de la machine. Le rotor 200 peut comporter plusieurs étages séparés par des joues intermédiaires et le nombre d'aimants 270 par étage peut être compris par exemple entre 4 et 64, pouvant être égal à 8 comme dans l'exemple représenté pour un moteur 8 pôles. Lorsque plusieurs étages sont utilisés et sont séparés par des joues intermédiaires, le nombre de joues sera de préférence égal au nombre des étages plus un.

Les joues 280, 290 peuvent être réalisées par exemple en aluminium ou en acier amagnétique. Les joues 280 et 290 sont fixées sur l'arbre 210 au moyen de boulons 281. Des taraudages 500 sont réalisés sur les joues 280, 290, à leur périphérie, pour permettre la fixation de vis d'équilibrage.

Comme on peut le voir sur la figure 13 notamment, la joue 280 présente un bord radialement extérieur 282 circulaire, situé en retrait du bord radialement extérieur 235 des pièces polaires 230 et du bord radialement extérieur des aimants 270, lequel se situe sensiblement au niveau des extrémités 235a des faces bombées.

Une zone annulaire A est ainsi ménagée autour de la joue 280, permettant la lecture du champ magnétique des aimants 270 du rotor au moyen de détecteurs 190 que l'on peut voir sur la figure 4. On voit sur cette figure 4 que les détecteurs 190 peuvent recouvrir légèrement le rotor 200, grâce au positionnement en retrait de la joue 280.

Les détecteurs 190 sont, dans l'exemple de réalisation décrit, au nombre de trois, le moteur étant triphasé, et comprennent chacun un capteur à effet Hall agencé pour détecter le champ magnétique au-dessus de la région périphérique A du rotor 200, autour de la joue 280. La lecture du champ magnétique se fait selon un axe parallèle à l'axe de rotation du rotor, le capteur à effet Hall venant en recouvrement de la région périphérique A. Les détecteurs 190 sont montés, dans l'exemple illustré, sur trois dents consécutives 130 situées au voisinage de l'ouïe 111.

Chaque détecteur 190 est fixé par une vis 191 sur une dent 130 du stator, cette vis 191 étant engagée dans un trou 125. Chaque détecteur 190 s'étend suivant l'axe radial Zᵤ, Zᵥ ou Z_{w} de la dent associée et traverse la bobine 340 engagée sur cette dent. Les bobines 340 présentent à cet effet une section intérieure dont la longueur est suffisamment grande pour permettre le passage du détecteur 190. L'espace ménagé entre une bobine et la dent correspondante pour le passage du détecteur peut être de l'ordre de 5 mm, par exemple, un tel espace permettant d'isoler la bobine et la dent là où il n'y a pas d'isolant 349.

La lecture directe du champ magnétique des aimants permanents 270 est avantageuse parce qu'elle permet d'éviter d'avoir à rapporter sur le rotor des éléments spécifiques servant uniquement à la lecture de la position angulaire du rotor. La fabrication du rotor s'en trouve simplifiée et la fiabilité renforcée. De plus, le montage des détecteurs 190 dans l'espace compris entre les bobines 340 et les dents 130 s'avère particulièrement compact, tout en permettant un accès aisé aux détecteurs 190 afin de les remplacer, si nécessaire.

Chaque détecteur 190 est positionné à l'intérieur d'une bobine 340 de phase donnée (u, v et w). Chaque détecteur 190 permet de détecter quelle polarité du rotor se situe en face de la bobine associée (et donc de la phase concernée) à un instant donné. Chaque détecteur 190 délivre un signal bas ou haut selon la polarité détectée. Chaque détecteur 190 comporte un circuit électronique de mise en forme des signaux délivrés par le capteur à effet Hall, afin de réduire la sensibilité aux parasites. Selon la position du rotor, il y a six possibilités de combinaison des différents signaux délivrés par les détecteurs 190, et chaque changement de triplet constitué par les états des détecteurs 190 correspondant à une position angulaire déterminée du rotor. On peut ainsi connaître à des instants précis la position angulaire du rotor, et calculer par interpolation la position du rotor entre ces instants, connaissant sa vitesse. L'excitation des bobinages 340 peut ainsi s'effectuer de manière optimale, avec le déphasage souhaité. Le courant dans chaque bobine peut ainsi s'annuler en changeant de sens lorsqu'un aimant se trouve dans l'axe de la dent correspondante. A la différence d'un moteur à réluctance, qui ne travaille qu'en attraction, le moteur qui vient d'être décrit travaille sans réluctance (L_{d} étant égal à L_{q} dans l'exemple considéré) en attraction et en répulsion, et permet de générer un couple important.

Chaque détecteur 190 comporte en outre un capteur de température.

La connaissance des températures des bobines 340 des différentes phases permet de détecter un éventuel disfonctionnement du moteur.

Le rotor 200 comporte, sur l'une au moins des joues 280 et 290, des ailettes 291 de refroidissement, visibles sur la figure 1 notamment. On notera qu'une action de refroidissement supplémentaire est obtenue grâce à la présence des lobes 235 formés par les pièces polaires 230 à la périphérie du rotor, qui permettent de générer un courant d'air de refroidissement au coeur même du moteur.

Le moteur qui vient d'être décrit en référence aux figures 1 à 19 présente de très nombreux avantages, parmi lesquels :
- sa structure particulièrement compacte permet de le monter en porte-à-faux à l'extrémité d'un arbre, donc de diminuer le nombre de roulements et les pertes mécaniques par friction, ainsi que les problèmes de lubrification,
- le rotor peut tourner à une vitesse de rotation élevée sans craindre un détachement des aimants ni un échauffement excessif de ces derniers, ceux-ci étant peu exposés aux courants induits de surface,
- les bobines individuelles peuvent être aisément mises en place et remplacées, sans avoir à procéder à une réimprégnation du stator,
- la masse des aimants peut être relativement faible, et il n'est pas nécessaire de la fractionner,
- le nombre de dents et de bobines est relativement faible, ce qui facilite la fabrication,
- les têtes de bobines sont très courtes, ce qui permet d'obtenir un faible encombrement axial,
- les phases peuvent être bien séparées électriquement, sans contacts ni croisements,
- les spires des bobines peuvent être bien jointives, ce qui permet un bon remplissage des encoches,
- les ondulations de couple peuvent être rendues négligeables.

L'invention permet par exemple de fabriquer des machines tournantes électriques à partir d'une gamme de circuits magnétiques de stators et de rotors préfabriqués, de différents diamètres, les stators présentant des dents standards. On choisira par exemple les dimensions axiales des circuits magnétiques du rotor et du stator en fonction de la puissance à fournir, en empilant un nombre plus ou moins important de secteurs et de pièces polaires. Seules les bobines pourront par exemple être fabriquées sur mesure pour un circuit magnétique de stator réalisé à partir d'éléments préfabriqués, en déterminant le nombre de spires de la bobine, le diamètre des fils conducteurs du faisceau plat et le nombre de ces fils, en fonction des performances demandées par l'utilisateur de la machine.

L'invention n'est pas limitée à un moteur synchrone et s'applique également à une génératrice. Le rotor peut être intérieur ou extérieur.

La puissance électrique de la machine peut être comprise par exemple entre 1 et 750 kW. La vitesse de rotation du rotor peut être comprise par exemple entre 1000 et 10 000 trs/mn. Une machine conforme à l'invention peut trouver également des applications lorsque la vitesse est inférieure à 1000 trs/mn. Le diamètre extérieur de la machine peut être compris par exemple entre 50 mm et 1 m ; dans les applications les plus courantes, le diamètre extérieur pourra être compris entre 100 et 600 mm.

L'invention n'est pas limitée à un nombre de pôles particuliers ni à l'alimentation du stator avec du courant triphasé. Le courant peut être polyphasé à nₚₕₐₛₑₛ phases, n différent de trois.

L'arbre peut être réalisé dans d'autres matériaux amagnétiques que l'aluminium, par exemple des alliages d'aluminium.

Bien que cela soit moins avantageux, des aimants parallélépipédiques ou ayant d'autres formes encore pourraient être utilisés, éventuellement en combinaison avec des aimants en forme de coin.

Les dents du stator pourraient présenter une face tournée vers le rotor autre que cylindrique de révolution autour de l'axe du rotor.

Les encoches pourraient être semi-fermées.

Dans une variante de réalisation, les pièces polaires 230' sont empilées sur des barreaux 220', maintenus par des joues d'extrémités solidaires de l'arbre, comme illustré sur la figure 20. Sur cette figure, on voit que les aimants 270', qui présentent une forme en coin, sont disposés entre les pièces polaires 230' engagées sur les barreaux 220'. Les pièces polaires peuvent comporter un décrochement, comme représenté à la figure 21, afin de retenir les aimants 270' avant centrifugation.

## Revendications

1. Rotor de machine tournante électrique, comprenant une pluralité de masses polaires (230 ; 230') et une pluralité d'aimants (270 ; 270') assujettis aux masses polaires et fixés dans des logements du rotor formés entre les masses polaires, **caractérisé par le fait que** :
a) les masses polaires sont agencées de manière à ce que lesdits logements s'élargissent sous l'effet de la force centrifuge lorsque le rotor tourne à une vitesse supérieure à une vitesse prédéterminée, cet élargissement tendant à diminuer lorsque la vitesse de rotation diminue,
b) les aimants sont agencés pour s'engager dans les intervalles formés par l'élargissement des logements lorsque le rotor tourne à une vitesse supérieure à ladite vitesse prédéterminée, de sorte que les masses polaires enserrent les aimants lorsque la vitesse du rotor redescend en deçà de ladite vitesse prédéterminée.

2. Rotor selon la revendication 1, **caractérisé par le fait que** la forme des pièces polaires (230) et celle des aimants (270) sont choisies de manière à minimiser la différence L_{d} - L_{q}, où L_{d} est l'inductance dans l'axe direct et L_{q} est l'inductance dans l'axe en quadrature.

3. Rotor selon la revendication 1 ou 2, **caractérisé par le fait que** les masses polaires (230) sont disposées sur des nervures (220) de l'arbre.

4. Rotor selon la revendication 3, **caractérisé par le fait que** chaque nervure est configurée pour coopérer, par complémentarité de formes, avec une découpe correspondante réalisée sur la masse polaire associée.

5. Rotor selon la revendication 3 ou 4, **caractérisé par le fait que** les nervures (220) et la partie centrale (211) de l'arbre (210) sont réalisées en un matériau amagnétique, notamment de l'aluminium.

6. Rotor selon l'une quelconque des revendications 3 à 5, **caractérisé par le fait que** chaque nervure (220) présente, en section transversale, un profil avec des côtés opposés (222) ayant des parties inclinées faisant un angle (ii) avec un rayon passant par le milieu de la nervure (222), cet angle étant choisi de manière à permettre l'emploi, pour réaliser les nervures, d'un matériau moins résistant aux contraintes de cisaillement que celui utilisé pour réaliser les pièces polaires (230).

7. Rotor selon la revendication précédente, **caractérisé par le fait que** l'angle (ii) est de l'ordre de 70°.

8. Rotor selon l'une des revendications 6 et 7, **caractérisé par le fait que** ledit profil comporte des parties arrondies (222a, 222c).

9. Rotor selon la revendication 8, **caractérisé par le fait que** les parties arrondies (222a, 222c) présentent des rayons de courbure (Rₐ, R_{c}) différents.

10. Rotor selon l'une quelconque des revendications précédentes, **caractérisé par le fait que** les pièces polaires (230) présentent chacune, sur leur côté radialement extérieur, une face (235) bombée, convexe vers le stator.

11. Rotor selon l'une quelconque des revendications précédentes, **caractérisé par le fait que** des espaces (260) sont ménagés entre les bords radialement intérieurs des pièces polaires (230) et l'arbre (210).

12. Rotor selon l'une quelconque des revendications précédentes, **caractérisé par le fait qu'**il comporte au moins une joue d'extrémité (280) en un matériau amagnétique, dont la périphérie s'étend en retrait des bords des aimants (270) qui sont adjacents au stator.

13. Rotor selon l'une quelconque des revendications précédentes, **caractérisé par le fait qu'**il est agencé pour tourner à une vitesse comprise entre 1000 et 10 000 trs/mn.

## Claims

1. A rotor of a rotary electric machine, the rotor comprising a plurality of pole masses (230; 230') and a plurality of magnets (270; 270') secured to the pole masses and fixed in housings of the rotor formed between the pole masses, the rotor being **characterized by** the fact that:
a) the pole masses are arranged in such a manner that said housings become larger under the effect of centrifugal force when the rotor turns at a speed greater than a predetermined speed, with this enlargement tending to diminish as the speed of rotation decreases; and
b) the magnets are arranged to engage in the gaps formed by the housings becoming enlarged when the rotor turns at a speed greater than said predetermined speed, such that the pole masses clamp against the magnets when the speed of the rotor drops back below said predetermined speed.

2. A rotor according to claim 1, **characterized by** the fact that the shape of the pole pieces (230) and the shape of the magnets (270) are chosen in such a manner as to minimize the difference L_{d} - L_{q} where L_{d} is inductance on the forward axis and L_{q} is inductance on the quadrature axis.

3. A rotor according to any one of claims 1 or 2, **characterized by** the fact that the pole pieces (230) are engaged on splines (220) of the shaft.

4. A rotor according to claim 3, **characterized by** the fact that each spline is configured for cooperating by complementary shapes with a corresponding cutouts made on the corresponding pole piece.

5. A rotor according to any one of claims 3 ou 4, **characterized by** the fact that the splines (220) and the central portion (211) of the shaft (210) are made of a non-magnetic material, in particular of aluminum.

6. A rotor according to any one of claims 3 ou 5, **characterized by** the fact that the cross-section of each spline (220) presents a profile having opposite sides (222) with inclined portions at an angle (ii) to a radius passing through the middle of the spline (222), said angle being selected in such a manner as to make it possible for said splines to be made out of a material having weaker shear strength than the material used for making the pole pieces (230).

7. A rotor according to the preceding claim, **characterized by** the fact that the angle (ii) is about 70°.

8. A rotor according to claim 6 or claim 7, **characterized by** the fact that said profile includes rounded portions (222a, 222c).

9. A rotor according to claim 8, **characterized by** the fact that the rounded portions (222a, 222c) have different radii of curvature (Rₐ, R_{c}).

10. A rotor according to any preceding claim, **characterized by** the fact that each pole piece (230) has, on its side facing towards the stator, a face (235) that bulges being convex towards the stator.

11. A rotor according to any preceding claim, **characterized by** the fact that gaps (260) are left between the radially inner edges of the pole pieces (230) and shaft (210).

12. A rotor according to any preceding claim, **characterized by** the fact that the rotor has at least one end cheek-plate (280) of non-magnetic material, with the periphery thereof being set back from the edges of the magnets (270) which are adjacent to the stator.

13. A rotor according to any preceding claim, **characterized by** the fact that it is arranged to rotate at a speed lying in the range 1000 rpm to 10,000 rpm.

## Patentansprüche

1. Rotor einer umlaufenden elektrischen Maschine mit mehreren Polkörpern (230; 230') und mehreren Magneten (270; 270'), die den Polkörpern ausgesetzt sind und an zwischen den Polkörpern gebildeten Aufnahmen des Rotors befestigt sind, **dadurch gekennzeichnet, daß**.
a) die Polkörper so eingerichtet sind, daß die Aufnahmen unter Einwirkung der Zentrifugalkraft größer werden, wenn sich der Motor mit einer Geschwindigkeit über einer bestimmten Drehzahl dreht, wobei diese Vergrößerung die Tendenz hat, kleiner zu werden, wenn die Drehzahl abnimmt,
b) die Magneten so eingerichtet sind, daß sie in die Zwischenabstände eingreifen, die sich durch die Vergrößerung der Aufnahmen bilden, wenn sich der Motor mit einer Geschwindigkeit über der bestimmten Drehzahl dreht, so daß die Polkörper die Magneten einzwängen wenn die Rotorgeschwindigkeit unter die vorbestimmte Drehzahl abfällt.

2. Rotor nach Anspruch 1, **dadurch gekennzeichnet, daß** die Form der Polstücke (230) und der Magnete (270) so gewählt ist, daß die Differenz L_{d} - L_{q} minimal ist, wobei L_{d} die Induktivität in der direkten Achse und L_{q} die Induktivität in der Quadraturachse ist.

3. Rotor nach Anspruch 1 oder 2, **dadurch gekennzeichnet, daß** die Polkörper (230) in Rippen (220) der Achse angeordnet sind.

4. Rotor nach Anspruch 3, **dadurch gekennzeichnet, daß** jede Rippe dazu ausgelegt ist, durch Komplementärformen mit einem entsprechenden Ausschnitt zusammenzuwirken, der in dem zugeordneten Polkörper vorhanden ist.

5. Rotor nach Anspruch 3 oder 4, **dadurch gekennzeichnet, daß** die Rippen (220) und der zentrale Teil (211) der Achse (210) aus einem unmagnetischen Material, insbesondere aus Aluminium, bestehen.

6. Rotor nach einem der Ansprüche 3 bis 5, **dadurch gekennzeichnet, daß** jede Rippe (220) im Querschnitt ein Profil mit entgegengesetzten Seiten (222) aufweist, die schräge Teile aufweisen, die mit einem durch die Mitte der Rippe (220) verlaufenden Radius einen Winkel (ii) einschließen, der so gewählt ist, daß zum Herstellen der Rippen ein Material verwendbar ist, das gegen Abscherbelastungen weniger beständig ist als dasjenigen das zum Herstellen der Polstücke (230) verwendet wird.

7. Rotor nach einem der vorstehenden Ansprüche, **dadurch gekennzeichnet, daß** der Winkel (ii) in der Größenordnung von 70° liegt.

8. Rotor nach Anspruch 6 oder 7, **dadurch gekennzeichnet, daß** das Profil abgerundete Abschnitte (222a, 222c) aufweist.

9. Rotor nach Anspruch 8, **dadurch gekennzeichnet, daß** die abgerundeten Abschnitte (222a, 222c) verschiedene Krümmungsradien (Rₐ, R_{c}) aufweisen.

10. Rotor nach einem der vorstehenden Ansprüche, **dadurch gekennzeichnet, daß** die Polstücke (230) an ihrer radialen Außenseite jeweils eine gewölbte Seite (235) aufweisen, die zum Stator hin konvex ist.

11. Rotor nach einem der vorstehenden Ansprüche, **dadurch gekennzeichnet, daß** zwischen den radialen Innenrändern der Polstücke (230) und der Achse (210) Zwischenräume (260) ausgebildet sind.

12. Rotor nach einem der vorstehenden Ansprüche, **dadurch gekennzeichnet, daß** der Rotor mindestens ein Endstück (280) aus unmagnetischem Material aufweist, dessen Umfang gegenüber den Rändern der Magnete (270) zurückversetzt ist, die am Stator einander benachbart sind.

13. Rotor nach einem der vorstehenden Ansprüche, **dadurch gekennzeichnet, daß** der Rotor so eingerichtet ist, daß er sich mit einer Drehzahl zwischen 1.000 und 10.000 U/min dreht.
